# EUROPEAN PATENT SPECIFICATION

(11) **EP 4 467 328 B1**
(45) Date of publication and mention of the grant of the patent: **05.11.2025**
(21) Application number: 23382473.9
(22) Date of filing: 22.05.2023
(51) Int. Cl.: B29C 70/44, B29D 99/00

(54) **METHOD FOR MANUFACTURING SPARS OR RIBS FOR AIRCRAFTS**
VERFAHREN ZUR HERSTELLUNG VON HOLMEN ODER RIPPEN FÜR FLUGZEUGE
PROCÉDÉ DE FABRICATION DE LONGERONS OU DE NERVURES POUR AÉRONEFS

(43) Date of publication of application: 27.11.2024
(73) Proprietor: AIRBUS OPERATIONS, S.L.U., 28906 Getafe (Madrid) (ES)
(72) Inventor: MIGUEZ CHARINES, Yolanda, 28906 GETAFE (Madrid) (ES); FUENTES ESPEJO, Antonio José, 28906 GETAFE (Madrid) (ES); FERNANDEZ VILCHES, Angel, 28906 GETAFE (Madrid) (ES); VAZQUEZ SANCHEZ, Pablo, 28906 GETAFE (Madrid) (ES)
(74) Representative: Herrero & Asociados, S.L.

(56) References cited:
- WO-A1-2006/131532
- WO-A1-2015/015152
- WO-A1-2022/090951
- US-A1- 2007 175 171

## Description

The present invention relates to a method for manufacturing spars or ribs for aircrafts, in particular, for manufacturing spars or ribs formed from a composite material, constituted by a spar web and stiffeners.

### Background of the invention

The spars or ribs for aircrafts currently know typically consist of a flat or C- or L- or Z-shaped part to which T- or L-shaped stiffeners are joined, e.g., bonded, or co-cured or co-bonded.

Both co-bonding and secondary bonding involve the need for a peel ply prepreg and adhesive to ensure the quality of the bond between the stiffeners and spar.

The challenge of manufacturing spars or ribs with stiffeners occurs because it is difficult to do so if the spars or ribs have stiffeners on both sides of the spar web. In such cases, what is usually done is to cure the stiffeners on one side and place a peel ply on the other side, so that the stiffeners on the other side are co-bonded or bonded in a subsequent cycle.

This subsequent cycle makes the method and the tooling more complex.

WO2015015152A1 discloses an aircraft structure extending from a root to a tip, the root being adapted to be joined to an aircraft fuselage. The structure has a cover with an aerodynamic outer surface and an inner surface, a plurality of stiffeners, and a plurality of ribs. The ribs include an inboard rib and a plurality of further ribs between the inboard rib and the tip. Each of the stiffeners has a stiffener flange joined to the inner surface of the cover and a stiffener web extending away from the stiffener flange. One of the further ribs has a rib web and a plurality of rib feet, each rib foot including a first rib foot flange joined to the web of a respective one of the stiffeners, a second rib foot flange joined to the inner surface of the cover or to the flange of the respective one of the stiffeners, and a rib foot web joined to the rib web.

### Description of the invention

Therefore, an objective of the present invention is to provide a manufacturing method that permits the elimination of peel ply and/or adhesive and/or curing cycles.

With the manufacturing method of the invention, the aforementioned drawbacks are resolved, presenting other advantages that will be described below.

The manufacturing method according to the present invention is defined in claim 1.

Additional optional features are included in the dependent claims.

In particular, the method for manufacturing a spar for aircrafts comprises the following steps:
- placing at least one stiffener on one side of a spar web;
- placing a vacuum bag on the at least one stiffener and the spar web; and
- co-curing the at least one stiffener and the spar web.

The at least one stiffener and the spar web are co-cured until the spar web and the stiffener material is cured at a percentage between 60 and 80 %.

The co-curing of the at least one stiffener and the spar web is made placing the curing tools outside the vacuum bag, so that no adhesive ply between the stiffener feet and the spar web is needed.

Preferably, the, or each, stiffener comprises a foot and a web. The stiffener should be formed bending the stiffener foot or formed bending the stiffener web, but in that case the foot should be cut with a smooth angle respect to the spar web.

If wished, at least one additional stiffener can be placed on and joined to another side of the spar web, and in this case, preferably, the at least one additional stiffener is joined to another side of the spar web by co-bonding. As the spar web is cured between 60% and 80%, no peel ply on the spar web is need for this co-bonding. If the additional stiffener is co-bonded using curing tools outside the vacuum bag, the adhesive ply between the spar web and the stiffener feet can be avoided.

Preferably, the at least one stiffener has a T or L shape, and the spar web is flat or has a C-shape or a L-shape or a Z-shape.

The manufacturing method according to the present invention has the following advantages over the previous state of the art:
- Elimination of the peel ply and/or adhesive.
- Reduction of the curing time.
- Simplicity of the tooling to be used in the manufacturing method.

### Brief description of the drawings

For a better understanding of what has been stated, some drawings are attached in which, schematically and only as a non-limiting example, a practical case of embodiment is represented.
Figure 1 is a diagrammatical cross-section view of a spar for aircrafts during a co-curing step of the manufacturing method of the present invention;
Figure 2 is a diagrammatical cross-section view of a spar manufactured by the method of the present invention, according to a first embodiment; and
Figure 3 is a diagrammatical cross-section view of a spar manufactured by the method of the present invention, according to a second embodiment.

### Description of a preferred embodiment

The manufacturing method according to the present invention is for manufacturing spars or ribs for aircrafts, in particular for manufacturing composite spars 1 made from carbon fiber reinforcement plastic (CFRP), comprising a flat or Z-, L- or C-shaped spar web 2 and one or more T- or L-shaped stiffeners 3, so that the stiffener(s) 3 comprise(s) a foot and a stiffener web.

Firstly, at least one stiffener 3 is placed on one side of the spar web 2. Before this placement the foot of the stiffener(s) 3 can be shaped, i.e., providing a book effect on an edge of the stiffener foot so that it does not dig into the spar web 2, or the edge of the stiffener(s) 3 can be cut corresponding to the foot at an angle of less than 90° with respect to the spar web.

Then, a vacuum bag 4 is placed on the at least one stiffener 3 and the spar web 2, for co-curing the at least one stiffener 3 and the spar web 2. The at least one stiffener 3 and the spar web 2 are co-cured until the stiffener and spar material is cured at a percentage between 60 and 80 %, and not until 100 %, as usual in the prior art.

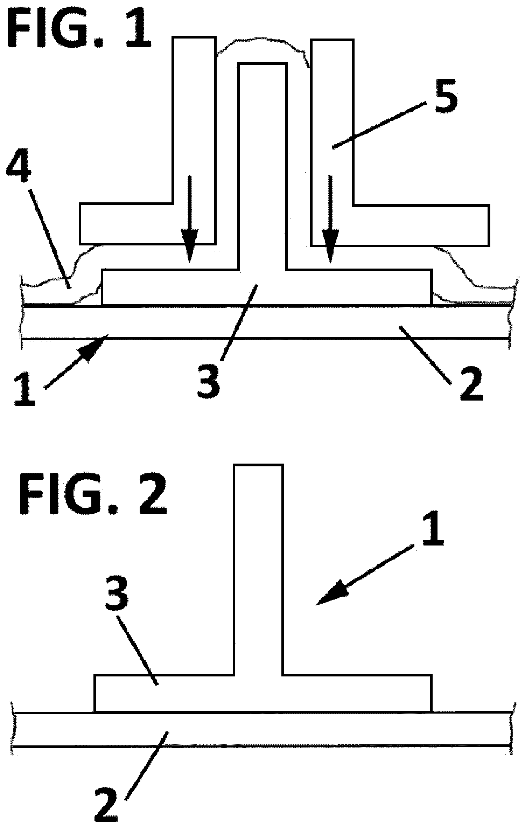

As the co-curing is done with curing tools 5 outside the vacuum bag 4, as shown in Fig. 1, there is no need of neither adhesives nor peeling elements.

As the stiffener(s) 3 and the spar web 2 are co-cured with the curing tools 5 outside the vacuum bag 4, it is possible to eliminate the adhesive, as the vacuum bag 4 itself forces the foot of the stiffener 3 to adhere to the spar web 2 geometry, guaranteeing the quality of the bond line without adhesive.

In this case, considering the usually small dimensions of the vertical stiffeners of the spars, it is even possible for the curing tools 5 to be made of 3D printing material, as the expansion difference between the composite and the 3D printing material has less influence on small dimensions and the surface quality of the curing tools 5 is less important when the curing tools 5 are placed outside the vacuum bag 4.

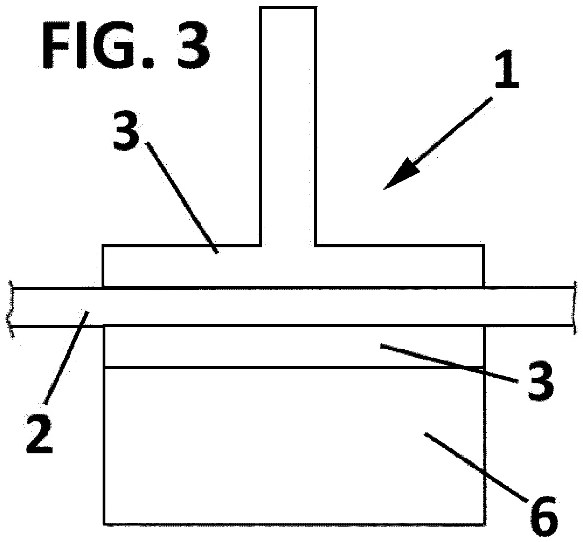

Two alternative embodiments of a spar 1 for aircrafts manufactured by the method according to the present invention are shown in Figures 2 and 3.

In figure 2, only one stiffener 3 is shown, but the spar 1 can comprise more than one stiffener 3. Furthermore, in this embodiment, the at least one stiffener 3 is placed on one side of the spar 1.

In figure 3, the spar 1 comprises more than one stiffener 3, placed and joined on both sides of the spar 1.

Preferably, after carrying out the steps of the method as described previously, at least one additional stiffener 6 is joined to the other side of the spar 1 by co-bonding.

Despite the fact that reference has been made to a specific embodiment of the invention, it is clear to a person skilled in the art that the described manufacturing method is susceptible to numerous variations and modifications, provided they fall within the scope of protection defined by the appended claims.

## Claims

1. Method for manufacturing spars (1) or ribs for aircrafts, comprising the following steps:
- placing at least one stiffener (3) on one side of a spar web (2);
- placing a vacuum bag (4) on the at least one stiffener (3) and the spar web (2); and
- co-curing the at least one stiffener (3) and the spar web (2),
**characterized in that** the at least one stiffener (3) and the spar web (2) are co-cured until the at least one stiffener (3) and the spar web (2) material are cured at a percentage between 60 and 80 %.

2. Method for manufacturing spars (1) or ribs for aircrafts according to claim 1, wherein the co-curing of the at least one stiffener (3) and the spar web (2) is made placing curing tools outside the vacuum bag (4).

3. Method for manufacturing spars (1) or ribs for aircrafts according to any one of the previous claims, wherein the, or each, stiffener (3) comprises a foot and the foot is cut with respect to the spar web (2).

4. Method for manufacturing spars (1) or ribs for aircrafts according to claim 3, wherein the foot is cut forming an acute angle with respect to the spar web (2).

5. Method for manufacturing spars (1) or ribs for aircrafts according to any one of the previous claims, wherein at least one additional stiffener (6) is placed on and joined to another side of the spar web (2).

6. Method for manufacturing spars (1) or ribs for aircrafts according to claim 5, wherein the at least one additional stiffener (6) is joined to another side of the spar web (2) by co-bonding.

7. Method for manufacturing spars (1) or ribs for aircrafts according any one of the previous claims, wherein the at least one stiffener (3) has a T or L shape.

8. Method for manufacturing spars (1) or ribs for aircrafts according any one of the previous claims, wherein the spar web (2) is flat or has a C-shape or a L-shape or a Z-shape.

## Patentansprüche

1. Verfahren zur Herstellung von Holmen (1) oder Rippen für Flugzeuge, das die folgenden Schritte umfasst:
- Platzieren mindestens einer Versteifung (3) auf einer Seite eines Holmstegs (2);
- Platzieren eines Vakuumbeutels (4) auf der mindestens einen Versteifung (3) und dem Holmsteg (2); und
- gleichzeitiges Aushärten der mindestens einen Versteifung (3) und des Holmstegs (2),
**dadurch gekennzeichnet, dass** die mindestens eine Versteifung (3) und der Holmsteg (2) gleichzeitig ausgehärtet werden, bis das Material der mindestens einen Versteifung (3) und des Holmstegs (2) zu einem Prozentsatz zwischen 60 und 80 % ausgehärtet ist.

2. Verfahren zur Herstellung von Holmen (1) oder Rippen für Flugzeuge nach Anspruch 1, wobei das gleichzeitige Aushärten der mindestens einen Versteifung (3) und des Holmstegs (2) erfolgt, indem Aushärtewerkzeuge außerhalb des Vakuumbeutels (4) platziert werden.

3. Verfahren zur Herstellung von Holmen (1) oder Rippen für Flugzeuge nach einem der vorstehenden Ansprüche, wobei die oder jede Versteifung (3) einen Fuß aufweist und der Fuß in Bezug auf den Holmsteg (2) geschnitten ist.

4. Verfahren zur Herstellung von Holmen (1) oder Rippen für Flugzeuge nach Anspruch 3, wobei der Fuß so geschnitten ist, dass er einen spitzen Winkel in Bezug auf den Holmsteg (2) bildet.

5. Verfahren zur Herstellung von Holmen (1) oder Rippen für Flugzeuge nach einem der vorstehenden Ansprüche, wobei mindestens eine zusätzliche Versteifung (6) auf einer anderen Seite des Holmstegs (2) platziert ist und mit dieser verbunden ist.

6. Verfahren zur Herstellung von Holmen (1) oder Rippen für Flugzeuge nach Anspruch 5, wobei die mindestens eine zusätzliche Versteifung (6) durch Verbundhaftung mit einer anderen Seite des Holmstegs (2) verbunden ist.

7. Verfahren zur Herstellung von Holmen (1) oder Rippen für Flugzeuge nach einem der vorstehenden Ansprüche, wobei die mindestens eine Versteifung (3) eine T- oder L-Form hat.

8. Verfahren zur Herstellung von Holmen (1) oder Rippen für Flugzeuge nach einem der vorstehenden Ansprüche, wobei der Holmsteg (2) flach ist oder eine C-Form oder eine L-Form oder eine Z-Form hat.

## Revendications

1. Procédé de fabrication de longerons (1) ou de nervures pour aéronefs, comprenant les étapes suivantes consistant à :
- placer au moins un raidisseur (3) sur un côté d'une âme (2) de longeron ;
- placer un sac sous vide (4) sur le au moins un raidisseur (3) et l'âme (2) de longeron ; et
- co-durcir le au moins un raidisseur (3) et l'âme (2) de longeron,
**caractérisé en ce que** le au moins un raidisseur (3) et l'âme (2) de longeron sont co-durcis jusqu'à ce que le au moins un raidisseur (3) et le matériau d'âme (2) de longeron soient durcis à un pourcentage entre 60 et 80 %.

2. Procédé de fabrication de longerons (1) ou de nervures pour aéronefs selon la revendication 1, dans lequel le co-durcissement du au moins un raidisseur (3) et de l'âme (2) de longeron est effectué en plaçant des outils de durcissement à l'extérieur du sac sous vide (4).

3. Procédé de fabrication de longerons (1) ou de nervures pour aéronefs selon l'une quelconque des revendications précédentes, dans lequel le, ou chaque, raidisseur (3) comprend un pied et le pied est coupé par rapport à l'âme (2) de longeron.

4. Procédé de fabrication de longerons (1) ou de nervures pour aéronefs selon la revendication 3, dans lequel le pied est coupé de manière à former un angle aigu par rapport à l'âme (2) de longeron.

5. Procédé de fabrication de longerons (1) ou de nervures pour aéronefs selon l'une quelconque des revendications précédentes, dans lequel au moins un raidisseur supplémentaire (6) est placé sur un autre côté de l'âme (2) de longeron et relié à celui-ci.

6. Procédé de fabrication de longerons (1) ou de nervures pour aéronefs selon la revendication 5, dans lequel le au moins un raidisseur supplémentaire (6) est relié à un autre côté de l'âme (2) de longeron par co-liaison.

7. Procédé de fabrication de longerons (1) ou de nervures pour aéronefs selon l'une quelconque des revendications précédentes, dans lequel le au moins un raidisseur (3) présente une forme de T ou de L.

8. Procédé de fabrication de longerons (1) ou de nervures pour aéronefs selon l'une quelconque des revendications précédentes, dans lequel l'âme (2) de longeron est plate ou présente une forme de C ou une forme de L ou une forme de Z.
